Europäisches Patentamt

European Patent Office

Office européen des brevets

(11) Veröffentlichungsnummer: **0 338 185**

**A2**

## (12) EUROPÄISCHE PATENTANMELDUNG

(21) Anmeldenummer: 89100217.2

(22) Anmeldetag: 07.01.89

(51) Int. Cl.4: **G01N 21/45 , H01H 33/56**

(30) Priorität: 20.04.88 DE 3813152

(43) Veröffentlichungstag der Anmeldung:
25.10.89 Patentblatt 89/43

(84) Benannte Vertragsstaaten:
**BE DE ES FR GB IT NL SE**

(71) Anmelder: **Felten & Guilleaume Energietechnik AG**
**Schanzenstrasse 24-30 Postfach 80 50 01**
**D-5000 Köln 80(DE)**

(72) Erfinder: **Levacher, Friedrich Karl, Dr.**
**Medardusstrasse 24**
**D-5024 Brauweiler(DE)**

(54) **Einrichtung mit einem optischen Gassensor zur Dichtemessung und -überwachung von Gasen.**

(57) Bekannt ist eine Einrichtung zur Dichtemessung von explosiven Gasen in Luft, bestehend aus Meßkammer mit Gassensor (GS), Lichtwellenleiter-(LWL-)Verbindungskabel (LK) und Meßgerät (MG). In dem Sensor wird ein Lichtstrahl in zwei Strahlen aufgeteilt, der eine Strahl durch das Gasgemisch, der andere durch ein Referenzgas geführt, und beide Strahlen werden wieder zusammengeführt. Dabei wird ein allein von der Fremdgaskonzentration (Dicht) abhängiges Interferenzgitter gebildet, und dieses wird einem vorgegebenen Phasengitter überlagert. Dabei entsteht ein Moire, dessen Struktur optisch aufgenommen und elektronisch ausgewertet wird. Diese Einrichtung und das Verfahren sollen so umgebildet werden, daß man einen Gasdichtewächter für einen geschlossenen Druckgasbehälter, und diesen mit einer kleineren Meßkammer erhalt.

Die Lösung besteht im wesentlichen darin, daß als Gassensor (GS) in der Längsachse der Meßkammer folgende Bauteile angeordnet sind: von den Anschlußsteckbuchsen (3) ausgehend zwei LWL-Anschlüsse mit ihren Endflächen (4) im Brennpunkt einer Sammellinse (5), die Linse selbst, mit Abstand und parallel hierzu eine ebene Glasplatte (6) mit halbdurchlässiger-halbspiegelnder Rückfläche und ebenso eine weitere Glasplatte (7), aber mit spiegelnder Vorderfläche.

Die Einrichtung dient vorwiegend als Gasdichtewächter für druckgasisolierte Schaltgeräte.

FIG. 1

## Einrichtung mit einem optischen Gassensor zur Dichtemessung und -überwachung von Gasen

Die Erfindung betrifft eine Einrichtung mit einem optischen Gassensor zur Dichtemessung und -überwachung von Gasen, bei welcher der Gassensor in einer Meßkammer angeordnet und über ein zweiadriges Lichtwellenleiter-(LWL-) Kabel mit einem Meßgerät verbunden ist. Sie dient vorwiegend als Gasdichtewächter für druckgasisolierte elektrische Geräte, wie SF5-isolierte Schaltgeräte und -anlagen.

Der prinzipielle Aufbau einer solchen Einrichtung ist bereits für ein Meßverfahren beschrieben, das vorwiegend zur Feststellung der Konzentration (Dichte) von explosiven Gasen (wie CH4) in Luft dient. Bei dem dort eingesetzten Gassensor wird ein Lichtstrahl in zwei Strahlen aufgeteilt, der eine Strahl wird durch das Gasgemisch, der andere durch ein Referenzgas geführt, und beide Strahlen werden wieder zusammengeführt. Aus einem Vergleich der beim Zeemann-Effekt auftretenden Schwebungsfrequenz des Lichts wird die Veränderung der optischen Dichte des Gasgemisches und damit die Veränderung der Fremdgaskonzentration ermittelt (DE-OS 36 27 876).

Eine laufende Anzeige der Fremdgaskonzentration erhält man, wenn der Laufzeitunterschied des Lichtes zwischen Gasgemisch und Referenzgas zur Bildung eines allein von der Fremdgaskonzentration abhängigen Interferenzgitters benutzt und dieses einem vorgegebenen Phasengitter überlagert wird. Dabei entsteht ein Moiré (gemustertes Überlagerungsbild). Dessen Struktur wird von einer Detektorvorrichtung mit mehreren Lichtwellenleitern (LWL) auf genommen, und die aufgenommenen Lichtintesitäten werden einer Auswerteelektronik zugeführt (DE-Anm P 38 04 134).

Setzt man eine solches Verfahren mit einem sogenannten Gasdichtewächter zur überwachung der Dichtheit von geschlossenen Gasbehältern ein, so benutzt man gegenüber den älteren Gasdruckwächtern den Vorteil, daß die Gasdichte im Gegensatz zum Gasdruck temperatur-unabhängig ist. Das heißt, daß die Gasdichte innerhalb eines nach außen abgeschlossenen Behälters so lange unverändert bleibt, wie keine Leckage auftritt. Daher kann ein Gasdichtewächter selbst Kleine Gasverluste unverzüglich erfassen und signalisieren, die bei einem Gasdruckwächter unter Umständen infolge eines Temperaturanstieges für einige Zeit überdeckt werden.

Der Erfindung liegt die Aufgabe zugrunde, die zuletzt erörterte Einrichtung und das mit ihr betriebene Verfahren so umzubilden, daß man einen Gasdichtewächter für einen geschlossenen Druckgasbehälter, und jenen mit einer kleineren Meßkammer erhält.

Die Lösung dieser Aufgabe ist mit den kennzeichnenden Merkmalen des Anspruchs 1 angegeben. Er betrifft den Gassensor. Anspruch 2 betrifft das Meßgerät.

Der Vorteil der Erfindung besteht darin, daß man einen Gasdichtewächter für einen geschlossenen Druckgasbehälter, insbesondere eine SF6-isolierte Schaltanlage erhält, wobei der Dichtewächter eine kleinere Meßkammer und der Gassensor einen einfacheren Aufbau hat.

Ein Ausführungsbeispiel der Erfindung ist in der Zeichnung dargestellt und wird im folgenden näher beschrieben. Es zeigen

- Fig. 1 das Schema des Gasdichtewächters, d. h. der Meßeinrichtung, bestehend aus Gassensor (GS), LWL-Kabel (LK) und Meßgerät (MG), und

- Fig. 2 das Blockschaltbild des Meßgerätes (MG).

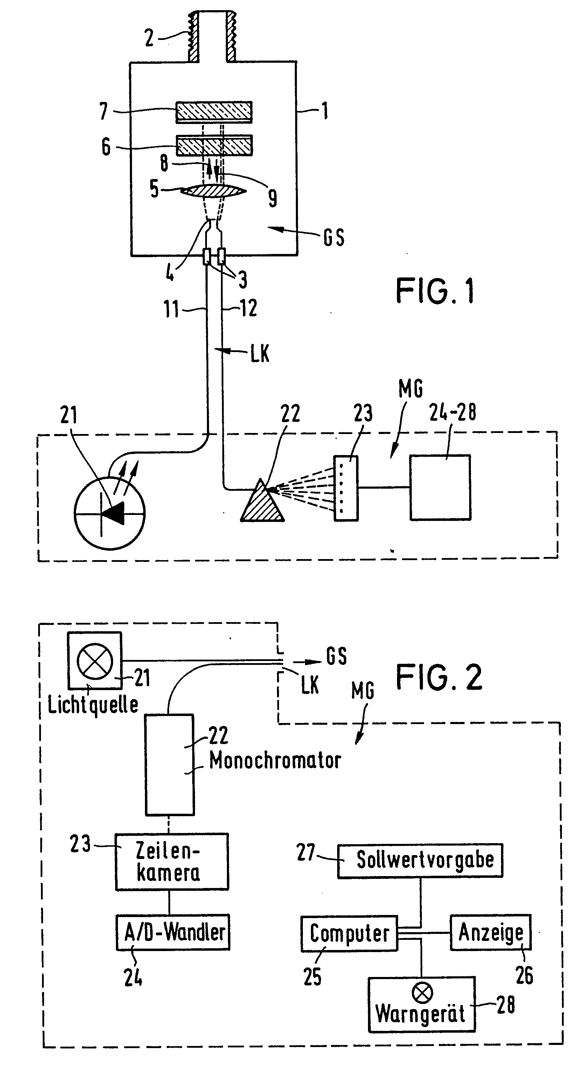

Wie die Fig. 1 verdeutlicht, hat die Meßkammer ein zylindrisches, gasdichtes und bis 10 bar belastbares Gehäuse 1 von ca. 30 mm Durchmesser und 100 mm Länge. Es enthält die zur Erzeugung der von der Gasdichte abhängigen Interferenzen benötigten optischen Bauteile 4 bis 7. Das Gehäuse hat an der einen Stirnwand den Stutzen 2 mit einem DIN-Normgewinde zum gasdichten Anschluß an den zu überwachenden Gasbehälter, und in der anderen Stirnwand die zwei gasdicht eingesetzten Buchsen 3 für die Stecker der beiden Andern 11 und 12 des LWL-Kabels LK.

Als optischer Gassensor GS sind in der Längsachse der Meßkammer folgende Bauteile angeordnet: Von den beiden Steckbuchsen 3 sind zwei LWL-Anschlüsse so weit geführt, daß sie im Brennpunkt der Sammellinse 5 enden. Die LWL-Endflächen 4 sind die Licht-Koppelstellen. Es folgt die Linse 5, welche das einfallende Licht parallel richtet. Mit Abstand und parallel hierzu ist die ebene Glasplatte 6 angeordnet, die mit einer halbdurchlässigen-halbspiegelnden Rückfläche versehen ist. Schließlich folgt mit festem Abstand (d) und parallel hierzu die weitere Glasplatte 7, die aber mit einer spiegelnden Vorderfläche versehen ist.

Über das mit den beiden Lichtwellenleitern (Gradient-LWL) 11 und 12 ausgestattete (zweiadrige) LWL-Kabel LK ist der Gassensor GS, mit dem Meßgerät MG verbunden. Der Abstand zwischen beiden Geräten kann mehrere 100 m betragen.

Wie Fig. 1 teilweise und Fig. 2 vollständig zeigt, enthält das Meßgerät MG die zur Speisung des Gassensors benötigte (weiße) Lichtquelle 21. - Das vom Sensor reflektierte Licht gelangt im Meßgerät zunächst zu dem Monochromator 22, wo es spektral so zerlegt wird, daß die Intensitätsperioden von der Zeilenkamera 23 erfaßt werden. Von dort werden sie über den A/D-(Analog/Digital-) Wandler 24 dem Computer (Mikrorechner) 25 zugeführt, wo sie eingelesen werden.

Durch harmonische Analyse der Intensitätsperioden kann ein direkter Zusammenhang zur Gasdichte sowie zur Gasdichteänderung, und bei vorgegebener Temperatur zum Gasdruck bzw. zur Gasdruckänderung hergestellt werden.

Diese Daten werden im Computer so aufbereitet, daß an dem nachgeschalteten Anzeigegerät 26 der temperaturbezogene Druck abgelesen werden kann. Weiter kann man mit dem zugeschalteten Vorgabegerät 27 den für den zu überwachenden Gasbehälter spezifischen Sollwert einschließlich der Toleranz einstellen. Überschreitet der Sollwert die vorgegebene Toleranz, dann führt dies zu einem Warnsignal des zugeschalteten Warngerätes 28.

Das Meßgerät ist für eine Versorgungsspannung von 220 V 50 Hz ausgelegt und kann als 19-Zoll-Einschub ausgeführt werden.

zur Wirkungsweise:

Beleuchtet man gemäß der Fig. 1 die beiden zueinander parallelen, ebenen Glasplatten 6 und 7 mit parallelem weißem Licht 8, so findet durch Interferenz der an der Vorder- bzw. Rückseite der Platten reflektierten Lichtwellen 9 teilweise Auslöschung statt: Die Interferenz bewirkt periodische Intensitätsänderungen im Spektrum des reflektierten Lichts.

Die Intensitätsperiode kann beschrieben werden durch die Funktion
$1 + \cos((2\pi/\lambda) \cdot 2 n d)$,
mit
$\lambda$ = Wellenlänge innerhalb des Spektrum des eingestrahlten weißen Lichts,
$n$ = Brechungsindex des Zwischenraums zwischen den beiden Glasplatten, und
$d$ = Abstand der Glasplatten voneinander.

Der Abstand d der Glasplatten wird durch die Wahl des Materials für die Abstandshalter (Quarz, Invar, Cerredur) konstant gehalten.

Somit wird die Intensitätsperiode - innerhalb des von der Lichtquelle ausgestrahlten Wellenlängenspektrums $(\lambda_0, \lambda_0 + \Delta\lambda)$ - nur vom Brechungsindex n des zwischen den beiden Glasplatten befindlichen Gases beeinflußt.

Da der Brechungsindex aber ausschließlich von der Gasdichte (Anzahl der Gasmoleküle pro cm³) abhängt, kann die Intensitätsperiode und deren Änderung als Maß für die Gasdichte bzw. deren Änderung herangezogen werden.

Bezugszeichenliste:

GS Gassensor

1. Gehäuse
2. Anschlußstutzen mit Normgewinde
3. Buchsen für die Stecker der beiden LWL-Kabeladern
4. Endflächen der beiden LWL-Anschlüsse (Licht-Koppelstellen)
5. Sammellinse
6. Glasplatte mit halbdurchlässiger-halbspiegelnder Rückfläche
7. Glasplatte mit spiegelnder Vorderfläche
8. zur Platte 7 hinlaufendes Lichtbündel
9. von der Platte 7 zurücklaufendes (reflektiertes) Lichtbündel

LK Lichtwellenleiter-(LWL-)Kabel (zweiadrig)

11. LWL-Hinleitung (Ader 1)
12. LWL-Rückleitung (Ader 2)

MG Meßgerät

21. Lichtquelle für weißes Licht
22. Monochromator
23. Zeilenkamera
24. A/D-(Analog/Digital-)Wandler
25. Computer (Mikrorechner)
26. Anzeigegerät
27. Vorgabegerät für Sollwert und dessen Toleranz
28. Warngerät

**Ansprüche**

1. Einrichtung mit einem optischen Gassensor zur Dichtemessung und -überwachung von Gasen, insbesondere als Gasdichtewächter für druckgasisolierte Schaltgeräte, bei welcher der Gassensor (GS) in einer Meßkammer angeordnet und über ein zweiadriges Lichtwellenleiter-(LWL-)Kabel (LK) mit einem Meßgerät (MG) verbunden ist,
dadurch gekennzeichnet,
- daß die Meßkammer ein zylindrisches, gasdichtes und bis 10 bar belastbares Gehäuse (1) hat, das in der einen Stirnwand einen Stutzen mit Normgewinde (2) zum gasdichten Anschluß an den zu überwachenden Gasbehälter, und in der anderen Stirnwand zwei gasdicht eingesetzte Buchsen (3) für die Stecker der beiden LWL-Kabeladern (11 und 12) hat,

- und daß als optischer Gassensor (GS) in der Längsachse der Meßkammer folgende Bauteile nacheinander angeordnet sind:

-- von den beiden Buchsen (3) ausgehend zwei LWL-Anschlüsse mit ihren Endflächen (Licht-Koppelstellen 4) im Brennpunkt einer Sammellinse (5),

-- die Linse (5) selbst,

-- mit Abstand und parallel hierzu eine ebene Glasplatte (6) mit halbdurchlässiger-halbspiegelnder Rückfläche,

-- und ebenfalls mit festem Abstand und parallel hierzu eine weitere Glasplatte (7), aber mit spiegelnder Vorderfläche.

2. Meß- und Überwachunseinrichtung nach Anspruch 1. dadurch gekennzeichnet, daß das Meßgerät (MG) wie folgt aufgebaut ist:

- ausgangsseitig eine Lichtquelle (21) für weißes Licht mit dem Anschluß der LWL-Hinleitung (11) zum Gassensor,

- und einganseitig auf den Anschluß der LWL-Rückleitung (12) vom Gassensor folgend:

-- ein Monochromator (22) und optisch nachgeschaltet eine Zeilenkamera (23),

-- dann elektrisch nachgeschaltet ein A/D-Wandler (24) und ein Computer (25),

-- und schließlich ein Anzeigegerät (26), ferner parallel hierzu ein Vorgabegerät (27) für einen Sollwert samt Toleranz und ein Warngerät (28).

FIG.1

FIG.2

Lichtquelle 21

Monochromator 22

Zeilen-kamera 23

A/D-Wandler 24

Sollwertvorgabe 27

Computer 25

Anzeige 26

Warngerät 28